# EUROPEAN PATENT SPECIFICATION

(11) **EP 1 773 547 B1**
(45) Date of publication and mention of the grant of the patent: **20.01.2010**
(21) Application number: 05756541.8
(22) Date of filing: 05.07.2005
(51) Int. Cl.: B25H 1/00, B62H 3/04

(54) **ADJUSTIBLE HOLDER FOR MOTORCYCLES**
EINSTELLBARER HALTER FÜR MOTORRÄDER
SUPPORT REGLABLE POUR MOTOS

(30) Priority: 09.07.2004 HR 20040625
(43) Date of publication of application: 18.04.2007
(73) Proprietor: Gasparovic, Tonko, 78054 Villingen-Schwenningen (DE)
(72) Inventor: Gasparovic, Tonko, 78054 Villingen-Schwenningen (DE)
(86) International application number: PCT/HR2005/000036
(87) International publication number: WO 2006/005970

(56) References cited:
- GB-A- 2 326 632
- US-A1- 2003 141 493

## Description

### 1. AREA OF APPLICATION

According to the International Patent Classification, the Invention is classifiable as follows:
**B62H 3/04** - *Separate supports or holders for parking or storing cycles*
***B62H 3*/*****04** involving forked supports or brackets for holding a wheels*

### 2. TECHNICAL PROBLEM

The technical problem addressed .by this Invention is how to design a holder with which it will be possible to:
- easily lift the rear part of several types of motorcycles having a pedal support on their side,
- lift the rear part at an inclination in order to bring the cycle into the best parking position,
- shift the cycle with its rear part raised, together with the holder,
- secure the cycle in place,
- bring the cycle into a position best suited for maintenance and repair works.

The defined technical problem has been solved through a holder design proposed in the present Invention.

### 3. STATE-OF-THE-ART

The document US 2003 141493 describes an adjustable holder for cycles according to the preamble of claim 1.

Of known solutions for lifting the rear part, below mentioned are the following two types of holders available on the market:
1. Mountable holder for cycling sport consisting of two bent parallel tubes cross-connected at their ends by means of an element. The bent tube has a larger and a smaller arm which together close an angle smaller than 90 degrees. The cross element regulates the distance between the bent tubes.
   Weaknesses:
   - complicated lifting /at the same time you have to hold the cycle with one hand, with the other hand place the hanging-up device in its position and raise the cycle by using leverage. All the time you have to keep the balance, which is not as simple as that considering the weight of the cycle. Indeed, there is a risk for the cyclist to get hurt when trying to prevent the cycle from falling or when it does fall, apart from damage that any such fall may cause to the cycle;
   - the holder is unstable, because even a slight force applied to the rear part of the cycle /such as giving the cycle a slight push forward/, may cause the cycle to topple;
   - with the holder the rear part of the cycle is raised only to a certain level, which involves problems in performing repair works on the rear part or other operations on the rear wheel and thus necessitates an extra effort;
   - the cycle, once lifted, can no longer be relocated or turned around;
   - safe lifting of the cycle requires two persons.
2. Holder consisting of a sectional 4-wheeled stand and a single-wheeled longitudinal tube. The stand is U-shaped, made of sheet plate, with bent ends directed outwards. Mounted on the bent ends are wheels which raise the stand above the ground level.
   Weaknesses:
   - the wheel is mounted on the stand;
   - due to the small height of the stand's central part from the ground level, resistance is likely to occur in moving the cycle if the surface is uneven or an obstruction, a pebble for example, is encountered;
   - storing of the cycle is not quite trouble-free, with the tire resting on the stand (not in «midair») - which is rather inconvenient especially in winter when damage is more likely to occur on the tire;
   - the cycle is slanted, so it is not possible to make full use of the available parking (storing) space.

### 4. DESCRIPTION OF THE INVENTION

The cycles holder, according to this Invention, consists of a stand and a cycle lifting mechanism. The design of the Invention enables jack-type hoisting of the cycle's rear part, with the following operations being also possible:
- moving the cycle in all directions without a risk of causing it to fall,
- adjusting the distance between the forks, depending on the width of the cycle's rear part, /applicable to different types of cycles
- inclining the cycle as required,
- locking the holder wheels, i.e., securing the holder from accidental movement.

Lifting of the cycle involves the following operations:
- resting the cycle on the pedal support
- placing the holder under the rear wheel
- adjusting the forks on cycle supports, and
- turning the bolts with handles

The parts of the holder:

| | | | |
|---|---|---|---|
| 1. | stand | 10. | cycle support |
| 2. | wheels | 11. | nut |
| 3. | lever | 12. | cycle support |
| 4. | support | 13. | axle |
| 5. | handle-fitted bolt | 14. | fork |
| 6. | bearing | 15. | rest |
| 7. | nut | 16. | axle |
| 8. | plate | 17. | cycle support |
| 9. | sleeve | | |

The cycle holder in the present design version is shown in the attached sketches as follows:
- **Dwg. 1 -** holder, front view
- **Dwg. 2 -** detail «A», cross-section
- **Dwg. 3 -** detail «B», cross-section
- **Dwg. 4 -** holder without the bolt, top view
- **Dwg. 5 -** detail «C» side view
- **Dwg. 6** - detail «C», sectional front view
With reference to the above drawings, it can be seen that the holder comprises the stand (1) with wheels (2) and the cycle hoisting mechanism. The stand (1) is made of metal tubes bent to form a U-shaped design, wider than the width of the rear part of the cycle. On the lower side of the stand (1) are four wheels (2) of which at least two are fitted with locks. Attached to the stand on the upper side are cycle supports (10) and (17). Cycle supports (10) are made of sheet plate, substantially U-shaped, welded to the stand, with a borehole to receive the plate (8). Cycle supports (17) are tube-shaped, welded to the stand, serving to receive the axles (16) carrying the levers (3). The hoisting mechanism consists of two identical, mutually independent assemblies. The assemblies are set in parallel and are connected to the stand (1). One of these assemblies is described below: It consists of a lever (3), a handle-fitted bolt (5), a nut (11), a plate (8), a sleeve (9), a bearing (10), a nut (7) and a support (4). The lever (3) has two parallel arms made of sheet plate. Welded to them are the cycle supports (12) and the rest (15). The rest (15) connects the arms into a whole. The arms have boreholes on their upper and lower parts. Through the boreholes on the lower part passes the axle (16), around which moves the lever (3), whereas through the boreholes on the upper part moves the axle (13) which enables the movement of the support (4). The axle (16) is seated in the cycle support (17). Cycle supports (12), made of sheet plate, have boreholes for fixing the nut (11). Through the nut (11) passes the handle-fitted bolt (5). The body of the handle-fitted bolt (5), which almost along its whole length contains a self-locking threading, has a narrowing on the lower part ending in the threading to which the nut (7) is attached preventing the bolt from slipping out The bolt (5), through the sleeve (9) and the bearing (6), leans on the plate (8). The plate (8), accommodated in the cycle support (10), has a mid-point borehole. By applying manual force on the handle-fitted bolt (5), the lever (3) is moved together with the support (4) and the fork (14), which causes the lifting of the rear part of the cycle. The support (4), made of sheet plate, Z-shaped, contains the fork (14) and the axle (13) which is non-detachably connected to the body of the support (4). Via the axle (13) the support leans on the lever (3), and on the rest (15) via the middle part of its body. The axle (13) serves for moving the support (4) in the direction of the lever's transverse axis, whereas the rest (4) restrains it and keeps it in place. -

Advantages of the proposed design in relation to the existing ones:
- the rear wheel is raised above the ground,
- easy lifting of cycles having just a pedal support on the side,
- it is possible to lift the cycle from a slanted position, which is not possible with other devices,
- lifting on either side helps bring the cycle into the best parking position,
- the cycle can be moved in all directions,
- the lifting and storing operation takes little time,
- the holder has wheels which can be locked, so no accidental movement of the cycle can occur,
- with the holder it is possible to bring the cycle into optimum position for maintenance and repair works,
- versatile, suitable for several types of cycles.

The Invention offers a flexible, durable, useful and low-cost device which incorporates essential improvements compared with other products of this kind.

To experts it will be obvious that particular components can be provided in different versions (e.g., hydraulics can replace mechanical hoisting), without departing from the scope and essence of the Invention.

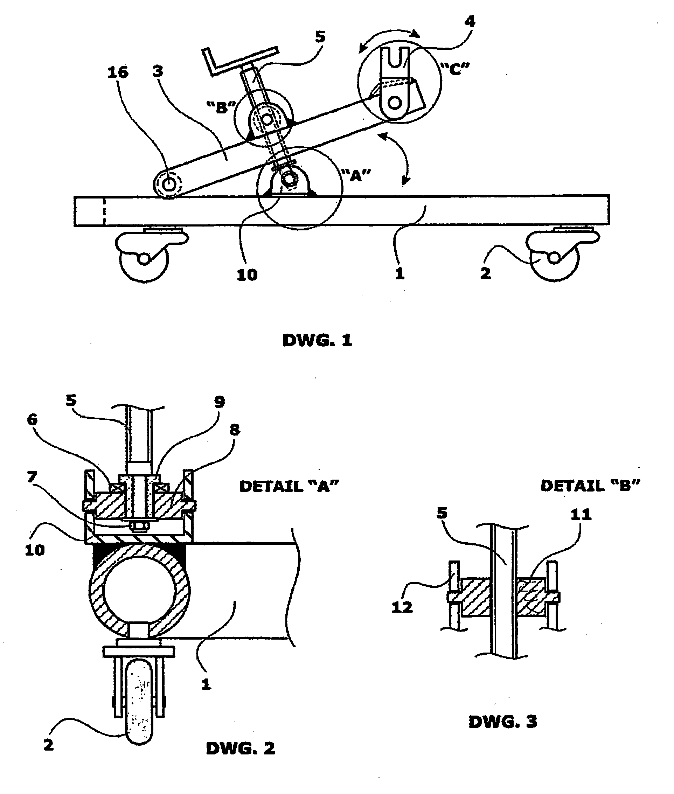

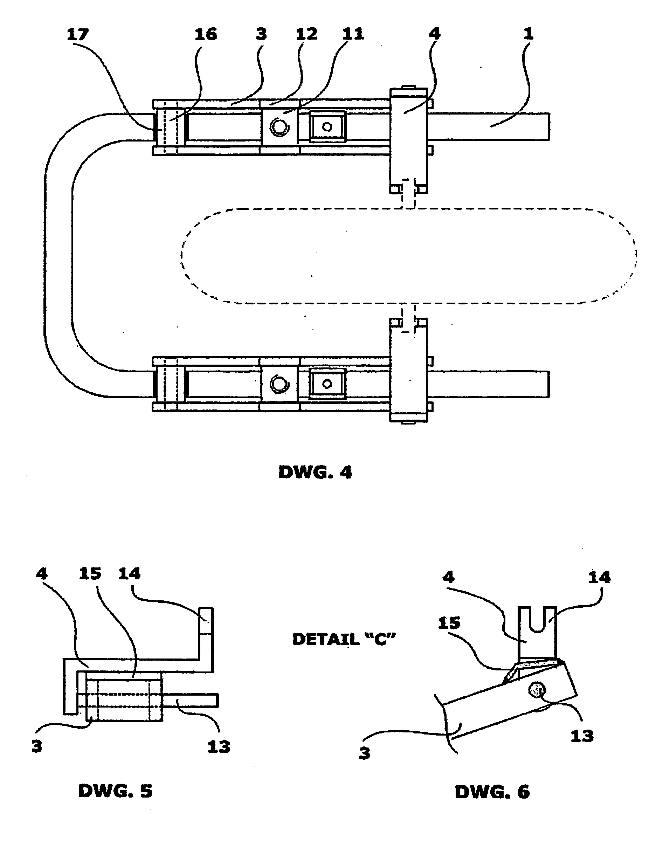

## Claims

1. An adjustable holder for cycles, for embracing a rear wheel, comprising a U-shaped stand (1) and a lifting mechanism, **characterized in that** the lifting mechanism consists of two identical and mutually independent assemblies, each consisting of:
• a double-arm lever (3) which incorporates a support (12) and a rest (15), the lever (3) being connected to a support (17) on the U-shaped stand (1) by means of an axle (16), wherein a wheel support (4) and a nut (11) are connected to the lever (3);
• a bolt (5) fitted with a handle, the bolt being screwed into the nut (11) and connected to a plate (8) via a sleeve (9) and a bearing (6), by means of a nut (7) which prevents the bolt (5) from slipping out of the plate (8) which is accommodated in a support (10) on the U-shaped stand (1);
• the wheel support (4), which includes a wheel axle engaging fork (14), being attached to the lever (3) by means of an axle (13) which passes through boreholes in the lever (3),
whereby rotation of the bolt (5), by means of its handle, raises and lowers the wheel support (4) with respect to the U-shaped stand (1).

2. Adjustable holder for cycles according to claim 1 **characterized in that** the levers (3) are turning round the point of connection with the stand (1).

3. Adjustable holder for cycles according to claims 1 and 2 **characterized in that** the supports (4) are movable in the direction of the holder's longitudinal and transverse axis.

## Patentansprüche

1. Ein einstellbares Gestell für Motorräder zum Umfassen eines Hinterrads, bestehend aus einem U-förmigen Stand (1) und einer Hebevorrichtung, **gekennzeichnet dadurch, dass** die Hebevorrichtung beinhaltet zwei identische und voneinander unabhängigen Baugruppen, jede bestehend aus:
• einem Doppelarmhebel (3), der eine Stütze (12) und eine Lehne (15) enthält, den Hebel (3) verbunden mit einer Stütze (17) auf dem U-förmigen Stand (1) mittels eine Achse (16), worin eine Radstütze (4) und eine Mutter (11) mit dem Hebel (3) verbunden sind;
• einem Bolzen (5), der mit einem Haltergriff versehen ist, wobei der Bolzen in die Mutter (11) eingeschraubt wird und ist verbunden mit einer Platte (8) durch eine Hülse (9) und ein Lager (6), und zwar mittels einer Mutter (7), die verhindert das Entgleiten des Bolzens (5) aus der Platte, die in einer Stütze (10) auf dem U-förmigen Stand (1) untergebracht ist;
• der Radstütze (4), die beinhaltet eine die Radachse haltende Gabel (14), zugefügt zum Hebel (3) mit Hilfe einer Achse (13), die durch die Bohrlöcher im Hebel (3) durchläuft (3),
wobei das Umdrehen des Bolzens (5), durch seinen Haltegriff, die Radstütze (4) hebt bzw. senkt in Bezug auf den U-förmigen Stand (1).

2. Das einstellbare Gestell für Motorräder gemäß dem Anspruch 1 **gekennzeichnet dadurch, dass** die Hebel (3) um den Punkt der Verbindung mit dem Stand (1) drehen.

3. Das einstellbare Gestell für Motorräder gemäß den Ansprüchen 1 und 2 **gekennzeichnet dadurch, dass** die Stützen (4) in die Richtung der Längs- und Querachse des Gestells bewegbar sind.

## Revendications

1. Porte motocycles réglable pour la prise de la roue arrière, comprenant le support (1) en forme de la lettre U et le mécanisme de soulèvement, **caractérisé par** la fait que le mécanisme est constitué de deux groupes identiques et autonomes, constitués chacun des composant suivants:
• levier (3) avec bras double comprenant le support (12) et l'appuis (15), levier (3) raccordé au soutien (17) sur le support (1) en forme de la lettre U à l'aide de l'arbre (16), dans lequel sont logés le support de la roue (4) et l'écrou (11) raccordés avec le levier (3);
• vis (5) avec poignée entrant dans l'écrou (11) et raccordée avec la plaque (8) à travers le manchon (9) et le palier (6) à l'aide de l'écrou (7) empêchant le glissement de la vis (5) de la plaque (8) logée dans l'appuies (10) sur le support (1) en forme de la lettre U;
• support de la roue (4), engendrant l'essieu de la roue qui tient en prise la fourche (14), raccordée au levier (3) à l'aide de l'arbre (13) passant à travers les ouvertures réalisées dans le levier (3),
par le fait que par la rotation de la vis (5) à l'aide de la poignée se soulève ou s'abaisse le support de la roue (4) par rapport au support (1) en forme de la lettre U.

2. Porte motocycles réglable selon la demande 1 **caractérisé par le fait que** les leviers (3) tournent autour le point de raccordement avec le support (1).

3. Porte motocycles réglable selon les demandes 1 et 2 **caractérisé par le fait que** les supports (4) sont mobiles dans le direction de l'axe longitudinale et transversale du soutien.
